(19) **Europäisches Patentamt / European Patent Office / Office européen des brevets**

(11) **EP 3 687 083 B1**

(12) **EUROPEAN PATENT SPECIFICATION**

(45) Date of publication and mention of the grant of the patent:
**29.03.2023 Bulletin 2023/13**

(21) Application number: **18933728.0**

(22) Date of filing: **29.11.2018**

(51) International Patent Classification (IPC):
**H04B 7/185** (2006.01)     **H04L 27/00** (2006.01)
**H04L 27/22** (2006.01)

(52) Cooperative Patent Classification (CPC):
**H04B 7/18515; H04B 7/18517; H04L 27/0014**

(86) International application number:
**PCT/CN2018/118199**

(87) International publication number:
**WO 2020/107333 (04.06.2020 Gazette 2020/23)**

(54) **VDE-BASED MULTI-PASSAGE CHANNEL DETECTION PROCESSING SYSTEM**

VDE-BASIERTES KANALDETEKTIONSVERARBEITUNGSSYSTEM MIT MEHREREN DURCHGÄNGEN

SYSTÈME DE TRAITEMENT DE DÉTECTION DE CANAL À PASSAGES MULTIPLES BASÉ SUR VDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2018 CN 201811432535**

(43) Date of publication of application:
**29.07.2020 Bulletin 2020/31**

(73) Proprietor: **Shanghai Spaceflight Electronic and Communication Equipment Research Institute Shanghai 201109 (CN)**

(72) Inventors:
• **XIANG, Qian**
  **Shanghai 201109 (CN)**
• **LI, Huiyuan**
  **Shanghai 201109 (CN)**
• **LUO. Xiaocheng**
  **Shanghai 201109 (CN)**
• **YAO, Chongbin**
  **Shanghai 201109 (CN)**
• **YE, Xi**
  **Shanghai 201109 (CN)**
• **ZHOU, Shaoqian**
  **Shanghai 201109 (CN)**

(74) Representative: **Argyma**
  **14 Boulevard de Strasbourg**
  **31000 Toulouse (FR)**

(56) References cited:
CN-A- 101 425 848     CN-A- 102 045 832
CN-A- 103 595 430     CN-A- 104 852 876
CN-A- 105 634 670     CN-A- 106 789 784
CN-A- 106 789 784     US-A- 6 061 406
US-A1- 2005 175 123     US-B1- 8 548 107

• "Technical Characteristics for a VHF Data Exchange System in the VHF Maritime Mobile Band", Rec. ITU-R M.2092-0, 31 October 2015 (2015-10-31), XP055700415,

**Description**

**BACKGROUND OF THE INVENTION**

**Field of the Invention**

The present invention relates to a processing system for multi-channel detection based on VHF data exchange (VDE).

**Description of the Related Art**

With the development of maritime communication technology, in order to solve the bottleneck of the Automatic Identification System (AIS) communication systems of existing ships in some areas with serious time slot conflict and low communication rate, the International Association of Lighthouse Authorities (IALA) proposed the ship's VHF data exchange (VDE) communication system. The satellite-to-ship communication link has been added to the VDE system to meet different requirements of offshore and inshore vessels, laying a foundation for future complex and versatile maritime communication applications.

For ships in VDE system, the ship communication within coverage can be coordinated by time division multiple access, frequency division multiple access, and code division multiple access to avoid message collision in the cell. For spaceborne receivers, due to the long transmission distance and high link loss of the sea-air target signal, the signal-to-noise ratio of the sea-air target signal received by the satellite is low, which requires high performance and high complexity of the demodulation algorithm and thus consumes many demodulation resources. Since the spaceborne receiver can cover many cells, the narrow-band multi-beam technology is needed for spatial segmentation to reduce message collisions and message conflict among cells. The conventional multi-beam receiving technology requires the satellite to perform high-performance receiving demodulation on each receiving beam, which has high requirements of hardware resources for satellite reception and demodulation.

CN 106 789 784 A discloses a modulation demodulation system for VDE systems according to the state of the art.

**SUMMARY OF THE INVENTION**

The primary objective of the present invention is to provide a processing system for multi-channel detection based on VHF data exchange (VDE).

To achieve the abovementioned objectives, the present invention provides a processing system for multi-channel detection based on VDE, which comprises a burst energy detection module, a frame header combing storage module, a high speed frequency correlation and compensation module, an open loop timing and phase detection module, a bi-orthogonal decoding and deciding module, an effective channel selection module, a demodulator-group module, and a combined packet output module, wherein

The burst energy detection module configured to receive filtered down-converted Intermediate Frequency (IF) signal from multiple channels based on VDE, use a double sliding window method to detect energy of the signals to estimate rough positions of burst signals, and transmit the rough positions to the frame header combing storage module;

The frame header combing storage module configured to retrieve frame header signals according to the rough positions, use a First In First Out (FIFO) to store and combine the frame header signals and the coarse beginning position of the burst signal in the time slot when there is the presence of input signal detected by the energy detection module, and then time-divisionally and sequentially output the combined multi-channel frame header signals at high speed to the high speed frequency correlation and compensation module;

the high speed frequency correlation and compensation module configured to time-divisionally perform frequency correlation and frequency compensation on synchronization words of frame headers by using a single-channel high-speed frequency correlator, record fine beginning positions of the frame headers, and transmit the frame header signals with frequency compensation to the open loop timing and phase detection module;

the open loop timing and phase detection module configured to perform fast PI/4 QPSK demodulation on the frame header signals with frequency compensation outputted by the high speed frequency correlation and compensation module and transmit the frame header signals to the bi-orthogonal decoding and deciding module;

the bi-orthogonal decoding and deciding module configured to bi-orthogonally decode demodulated data based on the fine beginning position of the frame head to generate a decoding result and if a decoded Link Configuration identifier is within the range of the received frame format, select the frame signal and send the selected frame signal to the effective channel selection module;

the effective channel selection module configured to select a data frame and a data length of a corresponding channel according the correctly decoded Link Configuration Identifier and start one demodulator of the demodulator-group module; and

the demodulator-group module configured to perform parallel demodulation on the data frames outputted by the effective channel selection module, and a parallel demodulator group transmits data to the combined packet output module to combine and packet and transmit the combined and packeted data to a subsequent very high frequency data exchange (VDE) protocol layer module through an interface.

In an embodiment of the present invention, the burst energy detection module is configured to use universal time coordinated (UTC) frame head time range estimation via the global positioning system (GPS) and the double sliding window method to estimate a difference $\Delta T$ between the maximum delay and the minimum delay of a satellite uplink burst signal according to the maximum and minimum distances of a satellite to a ship, and only use the double sliding window method to detect data in $\Delta T$ from the beginning of each time slot.

In an embodiment of the present invention, the high speed frequency correlation and compensation module is configured to time-divisionally perform frequency correlation on synchronization words of frame headers of multi-channel signals by using a single-channel high-speed frequency correlator, determine compensation frequency of a frame header signal and a fine beginning position of a frame header according to a correlation peak, and sequentially perform frequency compensation on each frame header signal and output a fine beginning position of a frame header to the open loop timing and phase detection module.

In an embodiment of the present invention, the open loop timing and phase detection module, comprising an open loop symbol timer and a phase detector, is configured to perform PI/4 QPSK demodulation on the frame header signals with frequency compensation outputted by the high speed frequency correlation and compensation module.

In an embodiment of the present invention, the open loop symbol timer is implemented by an open-loop O&M estimator and the phase detector uses an open loop M-power phase detector to perform phase detection, and fast-timing and phase-detected signals are sent to the bi-orthogonal decoding and deciding module.

In an embodiment of the present invention, the demodulator-group module is configured to sequentially perform parallel demodulation on the effective data frames outputted by the effective channel selection module, the number of demodulators of the demodulator-group module is M, which depends on the estimated communication mechanism and capacity of the covered region, the number of multiple channels is N, and M is greatly less than N.

The present invention provides a processing system applicable to satellite reception or gateway reception on the ground and combines the protocol layer applied scenario based on VDE, namely a half-duplex working mode. According to channel quality indication, the terminal device can select high-order modulation to transmit data and reduce time slot occupancy as much as possible. The present invention enables the system to quickly scan the frame header preamble of each channel by using fast and efficient frequency correlation and open-loop synchronous channel detection techniques under the condition of inputting multi-channel IF signal. Thus, the effective burst frame data is quickly extracted, thereby reducing the VDE reception processing delay and the number of back-end demodulators. That is to say, the present invention reduces requirements for the required hardware and power consumption and improves the comprehensive processing capability of the multi-channel receiving system.

## BRIEF DESCRIPTION OF THE DRAWINGS

Fig.1   is a diagram schematically showing a processing system for multi-channel detection based on very high frequency data exchange (VDE) according an embodiment of the present invention;

Fig.2   is a diagram schematically showing an O&M symbol timing estimator according to an embodiment of the present invention;

Fig.3   is a diagram schematically showing an M power phase detector according to an embodiment of the present invention; and

Fig.4   is a waveform result of online test of the high-speed frequency correlator, generated by FPGA, according to an embodiment of the present invention.

## DETAILED DESCRIPTION OF THE INVENTION

Below, the embodiments are described in detail in cooperation with the drawings to make easily understood the technical contents, characteristics and accomplishments of the present invention.

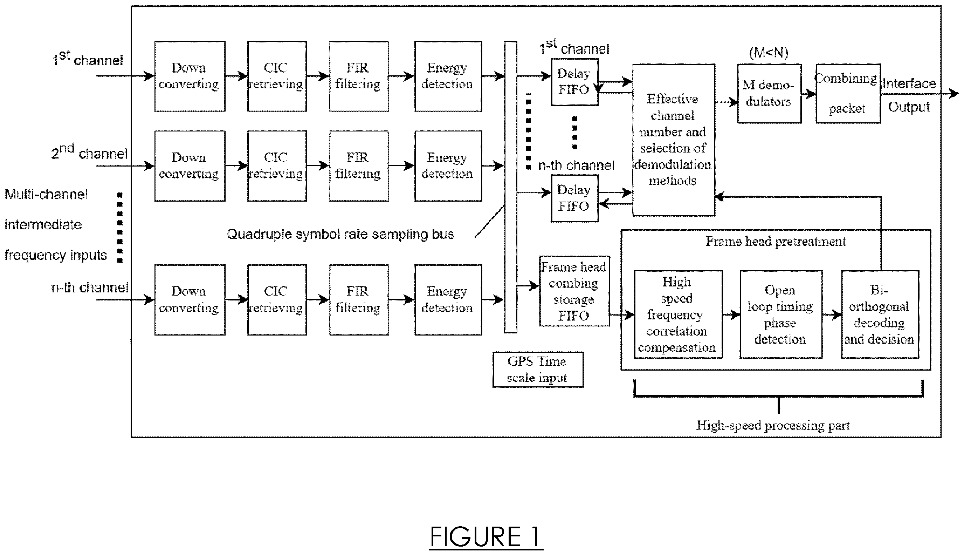

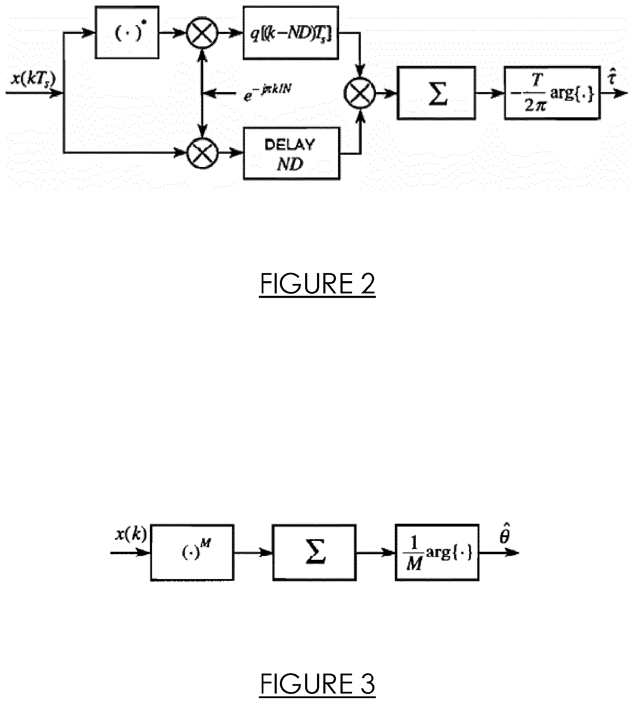

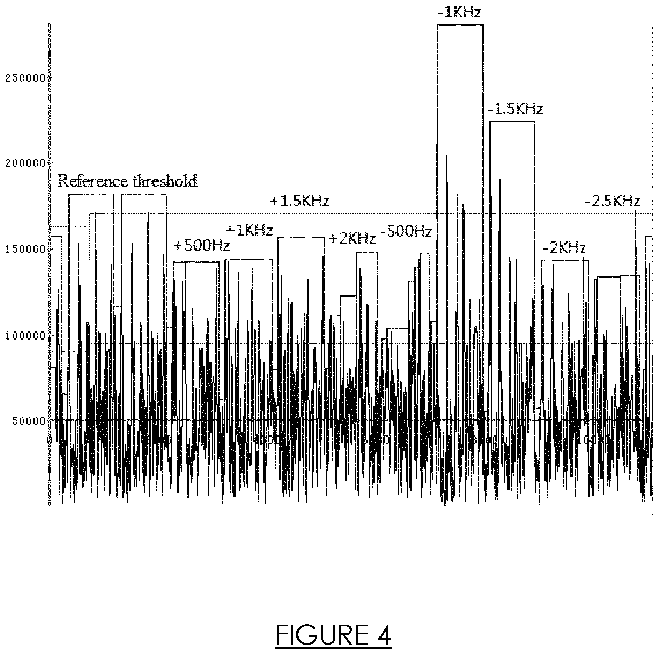

Fig.1 is a diagram schematically showing a processing system for multi-channel detection based on very high frequency data exchange (VDE) according an embodiment of the present invention. Fig.2 is a diagram schematically showing an O&M symbol timing estimator according to an embodiment of the present invention. Fig.3 is a diagram schematically showing an M power phase detector according to an embodiment of the present invention. Fig.4 is a waveform result of online test in FPGA of high-speed frequency correlator according to an embodiment of the present invention.

Refer to Fig.1. The present invention provides a processing system for multi-channel detection based on very high frequency data exchange (VDE), which comprises a burst energy detection module, a frame header combing storage module, a high speed frequency correlation and compensation module, an open loop timing and phase detection module, a bi-orthogonal decoding and deciding module, an effective channel selection module, a demodulator-group module, and a combined packet output module, wherein

the burst energy detection module configured to receive the multi-channel VDE IF down-converted and filtered signal, use a double sliding window method to detect the energy of the signals to estimate rough positions of burst signals, and transmit the burst signals to the frame header combing storage module;

the frame header combing storage module configured to retrieve frame header signals according to the rough positions, use a First In First Out (FIFO) to store and combine the frame header signals, and sequentially transmit the frame header signals to the high speed frequency correlation and compensation module;

the high speed frequency correlation and compensation module configured to time-divisionally perform frequency correlation and frequency compensation on synchronization words of frame headers by using a single-channel high-speed frequency correlator, record fine beginning positions of the frame headers, and transmit the frame headers to the open loop timing and phase detection module;

the open loop timing and phase detection module configured to perform fast PI/4 QPSK demodulation on the frame header signals with frequency compensation outputted by the high speed frequency correlation and compensation module and transmit the frame header signals to the bi-orthogonal decoding and deciding module;

the bi-orthogonal decoding and deciding module configured to bi-orthogonally decode demodulated data to generate a decoding result and determine whether to choose and transmit the frame signal to the effective channel selection module according to the decoding result;

the effective channel selection module configured to select a data frame and a data length of a corresponding channel and start one demodulator of the demodulator-group module according to the correctly decoded Link Configuration ID; and

the demodulator-group module configured to perform parallel demodulation on the inputted date frames, and a parallel demodulator group transmits data to the combined packet output module to combine and packet and transmit the combined and packeted data to a subsequent VDE protocol layer module through an interface.

In an embodiment of the processing system for multi-channel detection based on VDE of the present invention, the burst energy detection module is configured to use universal time coordinated (UTC) frame head time range estimation via the global positioning system (GPS) and the double sliding window method to estimate a difference $\Delta T$ between the maximum delay and the minimum delay of a satellite uplink burst signal according to the maximum and minimum distances of a satellite to a ship, and only use the double sliding window method to detect data in $\Delta T$ from the beginning of each time slot.

In an embodiment of the processing system for multi-channel detection based on VDE of the present invention, the high speed frequency correlation and compensation module is configured to time-divisionally perform frequency correlation on synchronization words of frame headers of multi-channel signals by using a single-channel high-speed frequency correlator, determine compensation frequency of a frame header signal and a fine beginning position of a frame header according to a correlation peak, and sequentially perform frequency compensation on each frame header signal and output a fine beginning position of a frame header to the open loop timing and phase detection module.

In an embodiment of the processing system for multi-channel detection based on VDE of the present invention, the open loop timing and phase detection module, comprising an open loop symbol timer and a phase detector, is configured to perform simple and fast PI/4 QPSK demodulation on the frame header signals with frequency compensation outputted by the high speed frequency correlation and compensation module. The open loop symbol timer is implemented by an open-loop O&M estimator and the phase detector uses an open loop M-power phase detector to perform phase detection, and fast-timing and phase-detected signals are sent to the bi-orthogonal decoding and deciding module.

In an embodiment of the processing system for multi-channel detection based on VDE of the present invention, the demodulator-group module is configured to sequentially perform parallel demodulation on the effective data frames outputted by the effective channel selection module, the number of demodulators of the demodulator-group module is M, which depends on the estimated communication mechanism and capacity of the covered region, the number of multiple channels is N, and M is greatly less than N. Accordingly, the present invention saves the number of the high-performance demodulators and hardware resources.

In order to reduce the number of demodulators in the multi-channel receiving system and pressure for the multi-channel demodulation hardware of the system, the present invention provides a processing system for multi-channel detection based on very high frequency data exchange (VDE), which uses the energy detection technology of the burst signal to determine the beginning position of the frame header, uses the multi-channel frame header frequency correlation technology to compensate the frequency offset, uses the fast open-loop timing and phase detection and decoding technology to detect whether there is a VDE frame signal, and finally uses the effective channel selection module to select the corresponding demodulator for demodulation and realize the extraction and rejection of the burst signal, thereby greatly reducing the number of back-end demodulators.

The present invention rapidly scans the frame header preamble of each channel to determine whether there is the frame header beginning signal of a valid burst data frame, and then extracts and transmits the data frame to a demodulator for packet analysis. The processing system for multi-channel detection based on VDE communication protocol mechanism of the present invention greatly reduces the number of receiving demodulators and reduces the hardware pressure of the receiving system. The present invention has great importance and important application prospects on the multi-channel reception of VDE sea-air target signals. The processing system for multi-channel detection based on VDE communication protocol mechanism of the present invention greatly reduces the number of back-end receiving demodulators, reduces the hardware pressure of the receiving system, and improves the system comprehensive processing capability by improving the front-end fast channel detecting technology. Accordingly, the present invention has great importance and important application prospects on the multi-channel reception of VDE sea-air target signals.

Specifically, the burst energy detection module uses coordinated universal time (UTC) frame head time range estimation via the global positioning system (GPS) and the double sliding window method to estimate a difference $\Delta T$ between the maximum delay and the minimum delay of a satellite uplink burst signal according to the maximum and minimum distances of a satellite to a ship. Since the beginning of each time slot is aligned with the fixed UTC, the burst energy detection module only use the double sliding window method to detect data in $\Delta T$ from the beginning of each time slot. Firstly, the received multi-channel VDE IF signal is down-converted, filtered, and extracted in parallel, wherein the sampling rate of the extracted signal is selected to be 4 times the symbol rate. The UTC is started according to a fixed time slot. The rising edge of the energy of the previous signal in $\Delta T$ in each time slot period is detected using the double sliding window method. The coarse beginning position of the burst signal is estimated according to whether the signal energy ratio of the two windows is greater than a threshold value. Then, the extracted data and the coarse beginning position of the burst signal are transmitted to the frame header combining storage FIFO module.

The frame header combining storage FIFO module is configured to use a FIFO to store and combine the header data and the coarse beginning position of the burst signal in the time slot when there is the presence of input signal detected by the energy detection module, and then time-divisionally and sequentially output the combined multi-channel frame header signals at high speed. The frame header output interval is set by the calculation time delay of the high speed frequency correlation and compensation module, and is transmitted to the high speed frequency correlation and compensation module.

The high speed frequency correlation and compensation module is configured to use a single-channel high-speed frequency correlator to perform frequency correlation on synchronization words of frame headers according to the high-speed frame header signal and the burst coarse beginning position calculated in energy detection and outputted from the frame header combing storage module. The correlation peak is used to determine the compensation frequency of the frame header signal and the fine beginning position of the frame head, frequency compensation is sequentially performed on each frame header signal, and the fine beginning position of the frame header is outputted to the open loop timing and phase detection module.

The open loop timing and phase detection module, comprising an open loop symbol timer and a phase detector, is configured to perform PI/4 QPSK demodulation on the frame header signals with frequency compensation and transmit the frame header signals to the bi-orthogonal decoding and deciding module.

The bi-orthogonal decoding and deciding module is configured to use a bi-orthogonal (32,6) decoder to decode the transmitted demodulation data based on the fine beginning position of the frame head. If the decoded result is failed or the decoded Link Configuration ID is not within the given range, the burst signal is directly discarded. If the decoded Link Configuration ID is within the range of the received frame format, the frame signal is selected and sent to the following effective channel selection module.

The effective channel selection module is configured to select a data frame and a data length of the corresponding channel according to the correctly decoded VDE Link Configuration ID, simultaneously start the delay FIFO at the front end to read data frames, and sequentially start one of M demodulator modules to set the demodulation frame format corresponding to the Link Configuration ID.

The demodulator-group module is configured to perform parallel demodulation on the data frame outputted from the effective channel selection module. The number of demodulators of the demodulator-group module is M and the number of multiple channels is N. M is greatly less than N, thereby saving the number of high-performance modulators and hardware resources. The parallel demodulator-group module outputs data to the combined packet output module.

The combined packet output module combines and packets multi-channel parallel high-performance demodulation outputs and transmits them to a VDE protocol layer module through an interface.

Refer to Fig.1. The present invention disclosed a processing system for multi-channel detection based on very high frequency data exchange (VDE), which comprises a burst energy detection module for N channels, a frame header combing storage module, a high speed frequency correlation and compensation module, an open loop timing and phase detection module, a bi-orthogonal decoding and deciding module, an effective channel selection module, a demodulator-group module, and a combined packet output module. The present invention takes a satellite multi-beam system as an example, the number of beams is 128 (that is, the number of input channels is N=128), and the number of demodulators of the demodulator group is 16 (ie, M=16), wherein.

The burst energy detection module uses GPS UTC frame head time range estimation and a double sliding window processing method to estimate the difference between the maximum delay and the minimum delay of the satellite uplink burst signal according to the maximum and minimum distance from the satellite to the ship. For example, according to the VDE Recommendation, the maximum delay difference is 8ms, and the start time of each time slot is aligned with the fixed UTC (there are 2250 VDE time slots in each minute of UTC). Here, only the 8 ms data from the beginning of each time slot is detected by the double sliding window method. Firstly, the received 128-channel VDE IF signal is down-converted, filtered, and extracted in parallel, and the sampling rate of the extracted signal is 4 times the symbol rate. The UTC is started according to the fixed time slot. For each time slot period, the double sliding window method is used to detect the rising edge of energy of the first 8ms signal. For example, according to VDE's Recommendation ITU-R M.2092-0+, the requirement for Ramp-up signal in satellite uplink is 14 symbols (4-times sampling rate samples 56 points). The width of each double sliding window moving along sampling point is 48, and the interval between two windows has a one-window width. According to the requirement for the minimum demodulation signal to noise ratio of the physical layer in VDE, the energy detection result is not affected by the absolute value of the signal energy. Determining whether the signal energy ratio of the two windows is greater than a threshold value estimates the coarse beginning position of the burst signal, and the data sampled by the 4-times symbol rate and the coarse beginning position of the burst signal after extraction are transmitted to the frame header combining storage FIFO module.

The frame header combining storage FIFO module uses a FIFO to store and combines the header data and the coarse beginning position of the burst signal in the time slot in which the input signal is detected after 128-channel parallel energy detection. In the Recommendation ITU-R M.2092-0+ for VDE, the frame header synchronization words of the frame format of the satellite physical layer have 48 symbols (spreading) and 27 symbols (non-spreading), and the Link Configuration ID has 16 symbols, which is 4 times the symbol sampling rate. Considering the error tolerance of the coarse beginning position, the range is forward expanded by 8 symbols and backward expanded by 8 symbols, where the frame header data that each burst frame needs to access can include the highest $(48+16+8+8) \times 4 = 320$ sampling points. Then, the multi-channel frame header signals after combination are sequentially and time-divisionally outputted at high speed, and the output interval of frame header is set by the calculated time of the subsequent high speed frequency correlation and compensation module, where the symbol rate of the VDE uplink is 33.6 Ksps, and the FIFO input rate is 134.4 KHz, which is 4 times the symbol rate. The FIFO output rate can be selected according to the actual state of the hardware. For example, the high-speed output processing clock is selected as 33.6MHz and selected for FIFO output rate, which is 250 times of 134.4 KHz, that is, data at the high speed of 33.6MHz is transmitted to the high speed frequency correlation and compensation module.

The high speed frequency correlation and compensation module uses a single-channel high-speed frequency correlator to time-divisionally perform frequency correlation on synchronization words of the frame headers according to the high-speed frame header signals outputted by the frame header combining storage module. Here, the Doppler frequency shift of the VDE satellite is larger. In addition, the deviation of the frequency stability of the local crystal oscillator requires a frequency offset estimation range of ±4KHz. Considering the data length of the 320 sampling points of the frame head and the ability of frequency locking of the subsequent open-loop synchronization module, the step of frequency correlation needs to reach 0.5KHz, that is, each frame header with frequency offset in the range of ±4 KHz needs to perform 16 times of 0.5 KHz time-division correlation calculation. The compensation frequency of the frame header signal is determined and frequency compensation is performed on the frame heads according to the maximum correlation peak of the 16 correlation calculations. As shown in Fig.2, which shows the online test waveform in FPGA for high speed frequency correlation (the frequency shift is set to -1KHz). Then the module records the fine beginning position of the frame header for the maximum correlation peak. Then, all frame header signals with frequency compensation and the fine beginning position of the frame header are sequentially send to the open loop timing and phase detection module.

The open loop timing and phase detection module, comprising an open loop symbol timer and a phase detector, is configured to perform simple and fast PI/4 QPSK demodulation on the frame header signals with frequency compensation. Like the high speed frequency correlation and compensation module, a single-channel high speed open loop timer and a phase detector are used to demodulate the frame header signals which requires the demodulation algorithm to achieve higher throughput, calculation speed, and simple implementation. In the present invention, the open-loop symbol timing module thus selects feedforward non-data assisted O&M (Oerder and Meyr) algorithm based on the maximum likelihood, the input data oversampled by 4 times has a length of 320, and the formula of the O&M estimator is described as follows:

$$\hat{\tau} = -\frac{T}{2\pi} \arg\left\{ \sum_{k=0}^{NL_0-1} | x(kT_s) |^2 \, e^{-j2\pi k/N} \right\} \tag{1}$$

Fig.2 is a diagram schematically showing the O&M symbol timing estimator.

The phase detection algorithm also needs to select an open-loop algorithm with fast and simple characteristics, high performance and superior signal-to-noise ratio. The symbol timing signal with the single-time rate timed and estimated by the O&M estimator is sent to the phase detector for phase recovery. The frame header with the single-time rate that needs phase recovery has a length of 80 symbols. For example, the M-power phase recovery algorithm is selected to perform fast open loop phase detection. The formula is described as follows:

$$\hat{\theta} = \frac{1}{M} \arg\left\{ \sum_{k=0}^{L_0-1} x^M(k) \right\} \tag{2}$$

Fig.3 is a diagram schematically showing the M power phase detector.

The demodulated signal after timing and phase detection is sent to the bi-orthogonal decoding and deciding module.

The bi-orthogonal decoding and deciding module is configured to use a bi-orthogonal (32,6) decoder to decode the transmitted demodulation data based on the fine beginning position of the frame head. If the decoded result is failed or the decoded Link Configuration ID is not within a given range, the burst signal is directly discarded. If the decoded Link Configuration ID is within the range of the possibly received frame format, the frame signal is selected and sent to the following effective channel selection module.

The effective channel selection module selects the data frame and the corresponding data length of the corresponding channel according to the correctly decoded VDE Link Configuration ID, and starts the delay FIFO at the front end to read data frame. Since the scanning and calculation for frame header preambles are processed at high speed using a fast synchronization open loop algorithm, the calculation delay of the frame header preamble is very small, that is, the required FIFO delay is very small, thereby reducing the resource consumption of the FIFO memory. Finally, one of the following 16 demodulator modules is sequentially turned on, and the demodulation frame format corresponding to the Link Configuration ID is set.

The 16 demodulator groups perform parallel demodulation on the data frames outputted by the effective channel selection module. The number of demodulators of the demodulator group is 16. The number of the multiple input channels is 128. The number of demodulators of the demodulator group is much less than the number of the multiple input channels, thereby saving the number of high-performance demodulators and hardware resources, the data outputted by the parallel demodulator group are sent to the combined packet module.

The combined packet output module combines and packets multi-channel parallel high-performance demodulation outputs and transmits them to a VDE protocol layer module through an interface.

Compared with the conventional technology, the present invention has the following advantages:

The present invention provides a processing system applicable to satellite reception or gateway reception on the ground. The system can quickly scan the frame header preamble of each channel by using fast and efficient frequency correlation and open-loop synchronous channel detection techniques under the condition of inputting multi-channel IF signal. Thus, the effective burst frame data is quickly extracted, thereby reducing the VDE reception processing delay and the number of back-end demodulators. That is to say, the present invention reduces requirements for the required hardware and power consumption and improves the comprehensive processing capability of the multi-channel receiving system.

The various embodiments in the present specification are described in a progressive manner, each embodiment focuses on differences from other embodiments, and the same similar parts between the various embodiments may be referred to each other.

A person skilled in the art will further appreciate that the elements and algorithm steps of the various examples described in connection with the embodiments disclosed herein can be implemented in electronic hardware, computer software or a combination of both. In order to clearly describe the interchangeability of the hardware and software, the composition and steps of the various examples have been generally

described in terms of function in the above description. Whether these functions are performed in hardware or software depends on the specific application and design constraints of the solution. A person skilled in the art can use different methods for implementing the described functions for each particular application, but such implementation should not be considered to be beyond the scope of the present invention.

The embodiments described above are only to exemplify the present invention but not to limit the scope of the present invention.

**Claims**

1.  A processing system for multi-channel detection based on Very High Frequency Data Exchange, VDE, comprising a burst energy detection module, a frame header combing storage module, a high speed frequency correlation and compensation module, an open loop timing and phase detection module, a bi-orthogonal decoding and deciding module, an effective channel selection module, a demodulator-group module, and a combined packet output module, wherein:

    - the burst energy detection module is configured to receive filtered down-converted Intermediate Frequency signals from multiple channels based on Very High Frequency Data Exchange, VDE, use a double sliding window method to detect energy of the signals to estimate rough positions of burst signals, and transmit the rough positions to the frame header combing storage module;
    - the frame header combing storage module is configured to retrieve frame header signals according to the rough positions, use a First-In-First-Out, FIFO, to store and combine the frame header signals and a coarse beginning position of the burst signal in a time slot when there is presence of input signal detected by the energy detection module, and then time-divisionally and sequentially output the combined multi-channel frame header signals at high speed to the high speed frequency correlation and compensation module;
    - the high speed frequency correlation and compensation module is configured to time-divisionally perform frequency correlation and frequency compensation on synchronization words of the frame header signals by using a single-channel high-speed frequency correlator, record fine beginning positions of the frame header signals, and transmit the frame header signals with frequency compensation to the open loop timing and phase detection module;
    - the open loop timing and phase detection module is configured to perform fast PI/4 Quarternary Phase-Shift Keying, QPSK, demodulation on the frame header signals with frequency compensation outputted by the high speed frequency correlation and compensation module and transmit the frame header signals to the bi-orthogonal decoding and deciding module;
    - the bi-orthogonal decoding and deciding module is configured to bi-orthogonally decode demodulated data based on the fine beginning position of the frame head to generate a decoding result and, if a decoded Link Configuration Identifier is within a range of a received frame format, select the frame signal and send the selected frame signal to the effective channel selection module;
    - the effective channel selection module is configured to select a data frame and a data length of a corresponding channel according to the correctly decoded Link Configuration Identifier and start one demodulator of the demodulator-group module.
    - the demodulator-group module is configured to perform parallel demodulation on data frames outputted by the effective channel selection module and a parallel demodulator group is configured to transmit data to the combined packet output module configured to combine and packet and transmit the combined and packeted data to a subsequent Very High Frequency Data Exchange, VDE, protocol layer module through an interface.

2.  The processing system according to claim 1, wherein the burst energy detection module is configured to use Universal Time Coordinated, UTC, frame head time range estimation via the Global Positioning System, GPS, and the double sliding window method to estimate a difference $\Delta T$ between maximum delay and minimum delay of a satellite uplink burst signal according to maximum and minimum distances of a satellite to a ship, and only use the double sliding window method to detect data in $\Delta T$ from beginning of each time slot.

3.  The processing system according to claim 1, wherein the high speed frequency correlation and compensation module is configured to time-divisionally perform frequency correlation on synchronization words of the frame header signals of multi-channel signals by using a single-channel high-speed frequency correlator, determine compensation frequency of a frame header signal and a fine beginning position of a frame header according to a correlation peak, and sequentially perform frequency compensation on each frame header signal and output a fine beginning position of a frame header to the open loop timing and phase detection module.

4.  The processing system according to claim 1, wherein the open loop timing and phase detection module, comprising an open loop symbol timer and a phase detector, is configured to perform PI/4 QPSK demodulation on the frame header signals with frequency compensation outputted by the high speed frequency correlation and compensation module.

5. The processing system according to claim 4, wherein the open loop symbol timer is implemented by an open-loop O&M estimator and the phase detector uses an open loop M-power phase detector to perform phase detection, and fast-timing and phase-detected signals are sent to the bi-orthogonal decoding and deciding module.

6. The processing system according to claim 1, wherein the demodulator-group module is configured to sequentially perform parallel demodulation on the effective data frames outputted by the effective channel selection module, number of demodulators of the demodulator-group module is M, which depends on the estimated communication mechanism and capacity of the covered region, number of multiple channels is N, and M is greatly less than N.

**Patentansprüche**

1. Ein Verarbeitungssystem für die Mehrkanalerfassung auf der Basis von sehr hochfrequentem Datenaustausch (Very High Frequency Data Exchange, VDE), mit einem Burst-Energie-Erfassungsmodul, einem Frame-Header-Durchsuchungs-Speichermodul, einem Hochgeschwindigkeits-Frequenzkorrelations- und - kompensationsmodul, einem Open-Loop-Timing- und -Phasendetektionsmodul, einem bi-orthogonalen Decodier- und Entscheidungsmodul, einem effektiven Kanalauswahlmodul, einem Demodulatorgruppenmodul und einem kombinierten Paketausgangsmodul, wobei:

   - das Burst-Energie-Erfassungsmodul so eingerichtet ist, dass es gefilterte, abwärts gewandelte Zwischenfrequenzsignale von mehreren Kanälen auf der Grundlage des sehr hochfrequenten Datenaustauschs (VDE) empfängt, ein Doppel-Gleitfenster-Verfahren verwendet, um die Energie der Signale zu erfassen, um grobe Positionen von Burst-Signalen zu schätzen, und die groben Positionen an das Frame-Header-Durchsuchungs-Speichermodul übermittelt;
   - das Frame-Header-Durchsuchungs-Speichermodul so eingerichtet ist, dass es Rahmenkopfsignale entsprechend den groben Positionen abruft, ein First-In-First-Out-Verfahren (FIFO) verwendet, um die Frame-Header-Signale und eine grobe Anfangsposition des Burst-Signals in einem Zeitslot zu speichern und zu kombinieren, wenn das Vorhandensein eines Eingangssignals vorliegt, das durch das Energieerfassungsmodul erfasst wird, und dann die kombinierten Mehrkanal-Frame-Header-Signale zeitgeteilt und sequentiell mit hoher Geschwindigkeit an das Hochgeschwindigkeits-Frequenzkorrelations- und Kompensationsmodul ausgibt;
   - das Modul für die Hochgeschwindigkeits-Frequenzkorrelation und - kompensation so eingerichtet ist, dass es die Frequenzkorrelation und Frequenzkompensation auf Synchronisationsworte der Frame-Header-Signale zeitversetzt durchführt, indem es einen Einkanal-Hochgeschwindigkeits-Frequenzkorrelation verwendet, feine Anfangspositionen der Frame-Header-Signale aufzeichnet und die Frame-Header-Signale mit Frequenzkompensation an das Zeit- und Phasenerkennungsmodul ohne Rückführung überträgt;
   - das Open-Loop-Timing- und -Phasendetektionsmodul so eingerichtet ist, dass es eine schnelle PI/4-Quarternary Phase-Shift Keying, QPSK, Demodulation an den Frame-Header-Signalen mit Frequenzkompensation durchführt, die vom Modul für die Hochgeschwindigkeits-Frequenzkorrelation und -kompensation ausgegeben wird, und die Frame-Header-Signale an das bi-orthogonale Decodierungs- und Entscheidungsmodul überträgt;
   - das biorthogonale Decodierungs- und Entscheidungsmodul so eingerichtet ist, dass es die demodulierten Daten auf der Grundlage der feinen Anfangsposition des Frame-Headers bi-orthogonal decodiert, um ein Decodierergebnis zu erzeugen, und, wenn ein decodierter Link Configuration Identifier innerhalb eines Bereichs eines empfangenen Rahmenformats liegt, das Rahmensignal auswählt und das ausgewählte Rahmensignal an das effektive Kanalauswahlmodul sendet;
   - das effektive Kanalauswahlmodul so einrichtet ist, dass es einen Datenframe und eine Datenlänge eines entsprechenden Kanals gemäß dem korrekt decodierten Link Configuration Identifier auswählt und einen Demodulator des Demodulator-Gruppenmoduls startet;
   - das Demodulator-Gruppenmodul so eingerichtet ist, dass es eine parallele Demodulation an Daten-Frames durchführt, die von dem effektiven Kanalauswahlmodul ausgegeben werden, und eine parallele Demodulatorgruppe so eingerichtet ist, dass sie Daten an das kombinierte Paketausgabemodul überträgt, das so eingerichtet ist, dass es Daten kombiniert und paketiert und die kombinierten und paketierten Daten über eine Schnittstelle an ein nachfolgendes sehr hochfrequentes Datenaustausch-Protokollschichtmodul überträgt.

2. Verarbeitungssystem nach Anspruch 1, wobei das Burst-Energie-Erkennungsmodul so eingerichtet ist, dass es die Universal Time Coordinated, UTC, die Schätzung des Frame-Header-Zeitbereichs über das Global Positioning System (GPS) und das Doppelschiebefensterverfahren verwendet, um eine Differenz $\Delta T$ zwischen der maximalen Verzögerung und der minimalen Verzögerung eines Satelliten-Uplink-Burstsignals gemäß den maximalen und minimalen Entfernungen eines Satelliten zu einem Schiff zu schätzen, und nur das Doppelschiebeverfahren verwendet, um Daten in ΔT ab Beginn jedes Zeitslots zu erkennen.

3. Verarbeitungssystem nach Anspruch 1, wobei das Hochgeschwindigkeits-Frequenzkorrelations- und Kompensationsmodul so eingerichtet ist, dass es unter Verwendung eines einkanaligen Hochgeschwindigkeits-Frequenzkorrelators eine zeitliche Frequenzkorrelation an Synchronisationsworten der Frame-Header-Signale von Mehrkanal-Signalen durchführt, die Kompensationsfrequenz eines Frame-Header-Signals und eine feine Anfangsposition eines Headers gemäß einem Korrelationspeak bestimmt und sequenziell eine Frequenzkompensation an jedem Header-Signal durchführt und eine feine Anfangsposition eines Frame-Headers an das Open-Loop-Timing- und -Phasendetektionsmodul ausgibt.

4. erarbeitungssystem nach Anspruch 1, wobei das Open-Loop-Timing- und Phasendetektionsmodul, das einen Open-Loop-Symboltimer und einen Phasendetektor umfasst, so eingerichtet ist, dass es eine PI/4-QPSK-Demodulation an den Rahmenkopfsignalen mit Frequenzkompensation durchführt, die von dem Hochgeschwindigkeits-Frequenzkorrelations- und -kompensationsmodul ausgegeben wird.

5. Verarbeitungssystem nach Anspruch 4, wobei der Open-Loop-Symbol-Timer durch einen Open-Loop-O&M-Schätzer implementiert ist und der Phasendetektor einen Open-Loop-M-Power-Phasendetektor verwendet, um eine Phasendetektion durchzuführen, und wobei Fast-Timing- und phasendetektierte Signale an das bi-orthogonale Decodierungs- und Entscheidungsmodul gesendet werden.

6. Verarbeitungssystem nach Anspruch 1, wobei das Demodulator-Gruppenmodul so eingerichtet ist, dass es sequentiell eine parallele Demodulation an den effektiven Datenrahmen durchführt, die von dem Modul für die Auswahl des effektiven Kanals ausgegeben werden, die Anzahl der Demodulatoren des Demodulator-Gruppenmoduls M ist, was von dem geschätzten Kommunikationsmechanismus, der Kapazität des abgedeckten Bereichs und der Anzahl der Mehrfachkanäle N abhängt, wobei M deutlich kleiner als N ist.

**Revendications**

1. Système de traitement pour une détection multicanal basé sur l'échange de données à très haute fréquence, VDE, comprenant un module de détection d'énergie d'impulsion, un module de stockage de combinaison de bloc en-tête, un module de corrélation et de compensation de fréquence à grande vitesse, un module de minutage et de détection de phase en boucle ouverte, un module de décodage et de décision bi-orthogonal, un module de sélection de canal effectif, un module de groupe de démodulateurs, et un module de sortie de paquets combiné, dans lequel :

- le module de détection d'énergie d'impulsion est configuré pour recevoir des signaux de fréquence intermédiaire convertis à la baisse filtrés de multiples canaux basés sur un échange de données très haute fréquence, VDE, utiliser une méthode de double fenêtre coulissante pour détecter l'énergie des signaux afin d'estimer des positions grossières de signaux d'impulsion, et transmettre les positions grossières au module de stockage de combinaison de bloc en-tête ;
- le module de stockage de combinaison de bloc en-tête est configuré pour récupérer les signaux de bloc en-tête selon les positions grossières, utiliser un premier entré, premier sorti, FIFO, pour stocker et combiner les signaux de bloc en-tête et une position de début grossière du signal d'impulsion dans un intervalle de temps lorsqu'il y a présence d'un signal d'entrée détecté par le module de détection d'énergie, puis fournir en sortie de manière divisée dans le temps et séquentielle les signaux de bloc en-tête multicanal combinés à grande vitesse au module de corrélation et de compensation de fréquence à grande vitesse ;
- le module de corrélation et de compensation de fréquence à grande vitesse est configuré pour effectuer une corrélation de fréquence divisée dans le temps et une compensation de fréquence sur des mots de synchronisation des signaux de bloc en-tête à l'aide d'un corrélateur de fréquence à grande vitesse monocanal, enregistrer des positions de début fines des signaux de bloc en-tête et transmettre les signaux de bloc en-tête avec compensation de fréquence au module de minutage et de détection de phase en boucle ouverte ;
- le module de minutage et de détection de phase en boucle ouverte est configuré pour effectuer une démodulation rapide PI/4 de modulation par déplacement de phase en quadrature, QPSK, sur les signaux de bloc en-tête avec compensation de fréquence fournie en sortie par le module de corrélation et de compensation de fréquence à grande vitesse et pour transmettre les signaux de bloc en-tête au module de décodage et de décision bi-orthogonal ;
- le module de décodage et de décision bi-orthogonal est configuré pour décoder bi-orthogonalement des données démodulées sur la base de la position de début fine du bloc en-tête pour générer un résultat de décodage et, si un identifiant de configuration de lien décodé se trouve dans une plage d'un format de trame reçu, sélectionner le signal de trame et envoyer le signal de trame sélectionné au module de sélection de canal effectif ;

- le module de sélection de canal effectif est configuré pour sélectionner une trame de données et une longueur de données d'un canal correspondant selon l'identifiant de configuration de lien décodé correctement et démarrer un démodulateur du module de groupe de démodulateurs.

- le module de groupe de démodulateurs est configuré pour effectuer une démodulation parallèle sur des trames de données fournies en sortie par le module de sélection de canal effectif et un groupe de démodulateurs parallèle est configuré pour transmettre des données au module de sortie de paquet combiné configuré pour combiner et mettre en paquet et transmettre les données combinées et mises en paquet à un module de couche de protocole d'échange de données très haute fréquence, VDE, ultérieur par le biais d'une interface.

2. Système de traitement selon la revendication 1, dans lequel le module de détection d'énergie d'impulsion est configuré pour utiliser une estimation de plage de bloc en-tête à temps universel coordonné, UTC, via le système mondial de positionnement, GPS, et la méthode de double fenêtre coulissante pour estimer une différence $\Delta T$ entre un retard maximal et un retard minimal d'un signal d'impulsion de liaison montante de satellite selon des distances maximale et minimale d'un satellite à un navire, et utiliser uniquement la méthode de double fenêtre coulissante pour détecter des données en $\Delta T$ depuis le début de chaque créneau horaire.

3. Système de traitement selon la revendication 1, dans lequel le module de corrélation et de compensation de fréquence à grande vitesse est configuré pour effectuer de manière divisée dans le temps une corrélation de fréquence sur des mots de synchronisation des signaux de bloc en-tête de signaux multicanal en utilisant un corrélateur de fréquence à grande vitesse monocanal, déterminer une fréquence de compensation d'un signal de bloc en-tête et une position de début fine d'un bloc en-tête selon un pic de corrélation, et effectuer séquentiellement une compensation de fréquence sur chaque signal de bloc en-tête et fournir en sortie une position de début fine d'un bloc en-tête au module de minutage et détection de phase en boucle ouverte.

4. Système de traitement selon la revendication 1, dans lequel le module de minutage et détection de phase en boucle ouverte, comprenant une minuterie de symbole en boucle ouverte et un détecteur de phase, est configuré pour effectuer une démodulation PI/4 QPSK sur les signaux de bloc en-tête avec compensation de fréquence fournie en sortie par le module de corrélation et de compensation de fréquence à grande vitesse.

5. Système de traitement selon la revendication 4, dans lequel la minuterie de symbole en boucle ouverte est mise en oeuvre par un estimateur O&M en boucle ouverte et le détecteur de phase utilise un détecteur de phase de puissance M en boucle ouverte pour effectuer une détection de phase, et des signaux à minutage rapide et détectés en phase sont envoyés au module de décodage et de décision bi-orthogonal.

6. Système de traitement selon la revendication 1, dans lequel le module de groupe de démodulateurs est configuré pour effectuer séquentiellement une démodulation parallèle sur les trames de données effectives fournies en sortie par le module de sélection de canal effectif, le nombre de démodulateurs du module de groupe de démodulateurs est de M, lequel dépend du mécanisme de communication estimé et de la capacité de la région couverte, le nombre de canaux multiples est de N, et M est nettement inférieur à N.

FIGURE 1

## FIGURE 2

## FIGURE 3

FIGURE 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106789784 A